# EUROPEAN PATENT SPECIFICATION

(11) **EP 3 621 753 B1**
(45) Date of publication and mention of the grant of the patent: **24.08.2022**
(21) Application number: 18725607.8
(22) Date of filing: 10.05.2018
(51) Int. Cl.: B29C 48/13, B29C 48/48

(54) **A METHOD FOR FORMING CURVED LENGTHS OF EXTRUDED PROFILES/SECTIONS IN METAL ALLOYS**
VERFAHREN ZUR HERSTELLUNG GEKRÜMMTER LÄNGEN VON EXTRUDIERTEN PROFILEN/ABSCHNITTEN IN METALLLEGIERUNGEN
PROCÉDÉ DE FORMATION DE LONGUEURS INCURVÉES DE PROFILÉS/SEGMENTS EXTRUDÉS DANS DES ALLIAGES MÉTALLIQUES

(30) Priority: 10.05.2017 GB 201707519
(43) Date of publication of application: 18.03.2020
(73) Proprietor: Imperial College Innovations Limited, London Middlesex SW7 2AZ (GB)
(72) Inventor: ZHOU, Wenbin, London SW7 2PG (GB); LIN, Jianguo, London SW7 2PG (GB); DEAN, Trevor, London SW7 2PG (GB); WANG, Liliang, London SW7 2PG (GB)
(74) Representative: Howson, Richard Giles Bentham
(86) International application number: PCT/GB2018/051260
(87) International publication number: WO 2018/206960

(56) References cited:
- GB-A- 1 442 786
- SU-A1- 837 435
- US-A- 368 314
- US-A1- 2004 074 275
- US-A1- 2016 114 367

## Description

### Field

This disclosure relates to a method and equipment for forming curved metal alloy profiles and more particularly aluminium alloy profiles with predesigned curvature in one extrusion-bending process.

### Background

Reducing the weight of metal components used in land, sea and air conveyances leads to a reduction of fuel consumption and therefore a decrease of CO₂ emissions. Aluminium alloy profiles are extensively used as construction elements in industrial manufacturing for the production of ultra-light component structures with a high contour complexity, including seat rails, stringers, and frames in the aircraft industry as well as window frames and roof rails in the automotive industry. This is mainly because they facilitate construction of lightweight, strong, and stiff structures. Taking into account the demand for reduced aerodynamic resistance as well as improved aesthetics, the manufacture and application of highly precise curved aluminium alloy profiles with well adapted properties are quite necessary.

There are several widely acknowledged methods for curving aluminium alloy profiles. Normally they start with manufacturing straight profiles by shape rolling or extrusion, followed by the subsequent secondary bending process such as stretch bending, rotary draw bending, press bending, or roll bending (three-, four-, and six-roll-bending). However, these procedures have disadvantages since: (i) more than one process is needed to achieve the profiles with desired curvature, which greatly decreases manufacturing productivity; (ii) spring-back and cross-sectional deformations usually occur due to the high external bending strain applied in the second bending process; (iii) for hollow sections various fillers and mandrels are used in the secondary bending process to avoid the potential cross-sectional deformation and buckling; (iv) due to the high forces needed for bending profiles, heavy machines are required; and (v) many hollow profiles cannot be bent if the shell is too thin or the curvature is too high.

The challenge to improved production is to manufacture curved profiles with precise curvature, non-distorted cross-sections and well-defined properties at increased productivity.

US 2004/074275 describes an extru-bending machine that can bend a product by extruding two or more hot metal billets with the machine which consists of an extrusion die holder equipped with conical dies, a container holder heating a two or more-holed container with a conical plug, two or more extrusion stems, a hydraulic power system unit, a relative velocity control unit, and a support frame structure. The machine is characterized that, when two or more hot metal billets are welded together inside a conical die cavity and extruded to one product at the die exit, the extru-bending machine can bend the extruded part simultaneously during extruding with a gradient of extrusion velocity on the die's exit owing to the relative moving velocity of two or more extrusion stems.

SU 837435 , which forms the basis for the preamble of claims 1 and 11, describes carrying out extrusion with the simultaneous application of two forces with different speeds to a workpiece, that are directed perpendicular to a side surface of the workpiece on both sides of an extruded profile.

US 368,314 describes a machine for making curved tubes and pipes. The machine comprises a combination of two parallel or substantially parallel pistons, with a receiver for holding the plastic metal or material, a die secured to the receiver, and means for simultaneously and independently actuating the parallel pistons with reference to the die.

US 2016/114367 describes a container for use in a metal extrusion press. The container comprises a mantle having an elongate axial bore therein, the bore having a first transverse axis orthogonal to a second transverse axis, and a plurality of longitudinally extending heating elements accommodated by the mantle adjacent the bore. The heating elements are individually controllable for controlling a thermal profile within the container. The container also comprises a plurality of temperature sensors configured to measure the thermal profile within the container. The temperature sensors comprise a first temperature sensor and a second temperature sensor positioned on opposite sides of the first transverse axis, and a third temperature sensor and a fourth temperature sensor positioned on opposite sides of the second transverse axis.

GB 1442786 describes a method for making pipe bends or generally curved pipes of thermoplastic material, including the steps of extruding from a pipe extruder head having a mandrel and a die which are arranged eccentrically in relation to each other to define a tubular orifice, a pipe having a wall thickness which varies continuously around its periphery between a maximum and a minimum at opposite locations, passing the pipe directly from the extruder head into a cooling die having the desired constant curvature of the bend, the largest radius of curvature in the cooling die being imparted to the portion of the pipe having the largest wall thickness at the die orifice, and pulling off the curved pipe emerging from the cooling die by haul-off means with hauling wheels having peripheral speeds which are proportional to the radii of curvature of the longitudinal lines on the surface of the pipe bend which the wheels engage, the eccentricity between the mandrel and the die being so adjusted that during the bending process in the curved cooling die, a cross-section having a substantially uniform wall thickness is imparted to the finished curved pipe.

### Summary

In accordance with a first aspect of the disclosure, there is provided a method of extruding a material, comprising: providing the material into an extrusion chamber of an extrusion apparatus, wherein the extrusion chamber comprises an extrusion orifice and the extrusion apparatus comprises a first compression element and a second compression element in communication with the interior of the extrusion chamber, the first and second compression elements being independently movable relative to the extrusion chamber; moving the first and second compression elements to compress the material within the extrusion chamber and cause a velocity gradient in the extrusion material across the extrusion orifice; and extruding the material through the extrusion orifice such that the velocity gradient forms an extrudate with a curved profile; wherein moving the first compression element and the second compression element comprises moving the first compression element and the second compression element at different speeds along a common axis, wherein moving the first compression element and the second compression element at different speeds along the common axis comprises moving the first compression element and the second compression element towards each other in opposite directions along the common axis.

According to the first aspect, the plane of the cross-section of the extrusion orifice may be parallel to the common axis such that extruding the material through the extrusion orifice comprises extruding the material through the extrusion orifice substantially perpendicular to the common axis.

In accordance with a second aspect of the present disclosure, there is provided a method of extruding a material, comprising: providing the material into an extrusion chamber of an extrusion apparatus, wherein the extrusion chamber is a Y-shaped extrusion chamber comprising a first bore, a second bore and a central container, wherein the first bore and the second bore are positioned at an angle to each other and converge to meet the central container, and wherein each of the first bore, the second bore and the central container has an open end opposite to the point of convergence; wherein providing the material into the extrusion chamber comprises placing a first hot or cold billet into the open end of the first bore and placing a second hot or cold billet into the open end of the second bore; wherein the extrusion apparatus further comprises an extrusion die installed at the open end of the central container, the extrusion die comprising an extrusion orifice; and wherein the extrusion apparatus comprises a first compression element and a second compression element, wherein the first and second compression elements are in communication with the interior of the extrusion chamber, the first compression element being movable within the first bore relative to the extrusion chamber and the second compression element being independently movable within the second bore relative to the extrusion chamber; moving the first and second compression elements to compress the material within the extrusion chamber and cause a velocity gradient in the extrusion material across the extrusion orifice; and extruding the material through the extrusion orifice such that the velocity gradient forms an extrudate with a curved profile.

According to the second aspect, moving the first and second compression elements may comprise moving the first compression element along a first axis and moving the second compression element along a second axis different to the first axis. The first axis and the second axis may be at an angle to one another. The plane of the cross-section of the extrusion orifice may be perpendicular to a line that bisects the first and second axes such that extruding the material through the extrusion orifice comprises extruding the material through the extrusion orifice substantially parallel to the line.

The method of the second aspect may comprise moving the first compression element and second compression element at different speeds.

According to the first or second aspects, the first compression element and second compression element may have different cross-sectional areas perpendicular to their direction of movement. The material may be a metal alloy. The metal alloy may be aluminium alloy or magnesium alloy.

According to the first or second aspects, the method may further comprise providing a guide means adjacent to the extrusion orifice to control curvature of the extruded material. The method may further comprise providing a mandrel in the extrusion chamber opposite to the extrusion orifice. Extruding the material through the extrusion orifice may comprise extruding the material with a hollow cross-section defined by the mandrel and orifice. The plane of the cross-section of the mandrel that defines the hollow cross-section of the extruded material may be parallel to the plane of the cross-section of the extrusion orifice.

According to the first or second aspects, the method may further comprise preheating the material before providing it into the extrusion chamber. The method may comprise adjusting the speed of the first and second compression elements while keeping the velocity ratio constant, such that the temperature of the extruded material at the exit from the extrusion orifice is maintained at a target temperature at which solution heat treatment, SHT, takes place. The extruded material may be quenched after SHT using water, mist spray or air cooling. The method may further comprise varying the speed of movement of the first compression element and/or the second compression element to vary the velocity ratio as the material is extruded.

In accordance with a third aspect of the present disclosure, there is provided an apparatus for extrusion of a material, the apparatus comprising: an extrusion chamber for receipt of an extrusion material, the extrusion chamber comprising an extrusion orifice; a first compression element and a second compression element, the first and second compression elements being in communication with the interior of the extrusion chamber and being independently movable relative to the extrusion chamber, wherein: the first and second compression elements are configured to be moved to compress material within the extrusion chamber and cause a velocity gradient in the extrusion material across the extrusion orifice such that the velocity gradient forms an extrudate with a curved profile when material is extruded through the extrusion orifice; and the first compression element and the second compression element are configured to be moved at different speeds along a common axis, wherein the first compression element and the second compression element are configured to be moved towards each other in opposite directions along the common axis

According to the third aspect, the plane of the cross-section of the extrusion orifice may be parallel to the common axis.

In accordance with a fourth aspect of the present disclosure, there is provided an apparatus for extrusion of a material, the apparatus comprising: an extrusion chamber for receipt of an extrusion material, wherein the extrusion chamber is a Y-shaped extrusion chamber comprising a first bore, a second bore and a central container, wherein the first bore and the second bore are positioned at an angle to each other and converge to meet the central container, and wherein each of the first bore, the second bore and the central container has an open end opposite to the point of convergence, wherein the extrusion chamber is configured for receipt of a first billet into the open end of the first bore and for receipt of a second billet into the open end of the second bore; an extrusion die installed at the open end of the central container, the extrusion die comprising an extrusion orifice; a first compression element and a second compression element, the first and second compression elements being in communication with the interior of the extrusion chamber, the first compression element being movable within the first bore relative to the extrusion chamber and the second compression element being independently movable within the second bore relative to the extrusion chamber, wherein the first and second compression elements are configured to be moved to compress material within the extrusion chamber and cause a velocity gradient in the extrusion material across the extrusion orifice such that the velocity gradient forms an extrudate with a curved profile when material is extruded through the extrusion orifice.

According to the fourth aspect, the first compression element may be configured to be moved along a first axis and the second compression element may be configured to be moved along a second axis different to the first axis. The first axis and the second axis may be at an angle to one another. The plane of the cross-section of the extrusion orifice may be perpendicular to a line that bisects the first and second axes.

According to the third or fourth aspects, the first compression element and second compression element may be configured to be moved simultaneously. The first compression element and second compression element may be configured to be moved at different speeds. The first compression element and second compression element may have different cross-sectional areas perpendicular to their direction of movement.

The extrusion material may be a metal alloy. The metal alloy may be aluminium alloy or magnesium alloy. The extrusion orifice may be provided by an extrusion die that defines the geometry of the orifice.

According to the third or fourth aspects, the apparatus may further comprise a guide means adjacent to the extrusion orifice to control curvature of the extruded material. The apparatus may further comprise a mandrel in the extrusion chamber opposite to the extrusion orifice.

The extrusion material may be preheated. The extrusion chamber may be cylindrical. The cross-sectional area of the extrusion chamber may be larger than the cross-sectional area of the extrusion orifice.

According to the third or fourth aspects, the first compression element and/or the second compression element may be configured to be moved at varying speed.

According to the present disclosure, there is provided a method of forming curved metal alloy profiles comprising:
(i) providing the sideways extrusion setup, forward extrusion setup or angled extrusion setup;
(ii) pre-heating a metal alloy billet before transferring it to an extrusion container for hot extrusion; or directly transferring the unheated metal alloy billet to the extrusion container for cold extrusion;
(iii) applying pressure to the two dummy blocks through the corresponding two punches simultaneously, the metal alloy billet is pressed against the extrusion die and squeezed through the die opening; and
(iv) adjusting the velocities of the two punches so as to form a velocity gradient across the die orifice and produce a curved profile of the long extruded section.

This has the following advantages:
(i) forming curved profiles without defects such as distortion or thinning of the cross-section, spring-back, wrinkling and folding. Bending is intrinsic to the process, based on internal differential material flow, rather than external bending force;
(ii) forming profiles with ultra-fine grain size for cold extrusion and therefore improved mechanical properties due to severe plastic deformation (SPD) caused by shear stresses in the intersecting deformation zone of the container;
(iii) forming profiles with adjustable arbitrary curvatures in one extrusion-bending procedure, which greatly increases the manufacturing efficiency; and
(iv) no fillers or extra heavy machines are needed for the bending process, which greatly reduces the production cost.

### Brief Description of the Drawings

Exemplary embodiments of the disclosure shall now be described with reference to the drawings in which:
Figure 1a is a schematic illustration of an extrusion apparatus known in the art;
Figure 1b is a schematic illustration of another extrusion apparatus known in the art;
Figure 2 is a schematic illustration of an extrusion apparatus according to an embodiment;
Figure 3a is a schematic illustration of another extrusion apparatus not forming part of the invention;
Figure 3b is a cross-section through the line m-m in Figure 3a;
Figure 4 is a schematic illustration of yet another extrusion apparatus according to an embodiment;
Figure 5 is a schematic illustration of the orientation of a first, second and third axis of an extrusion apparatus according to an embodiment.

Throughout the description and the drawings, like reference numerals refer to like parts.

### Specific Description

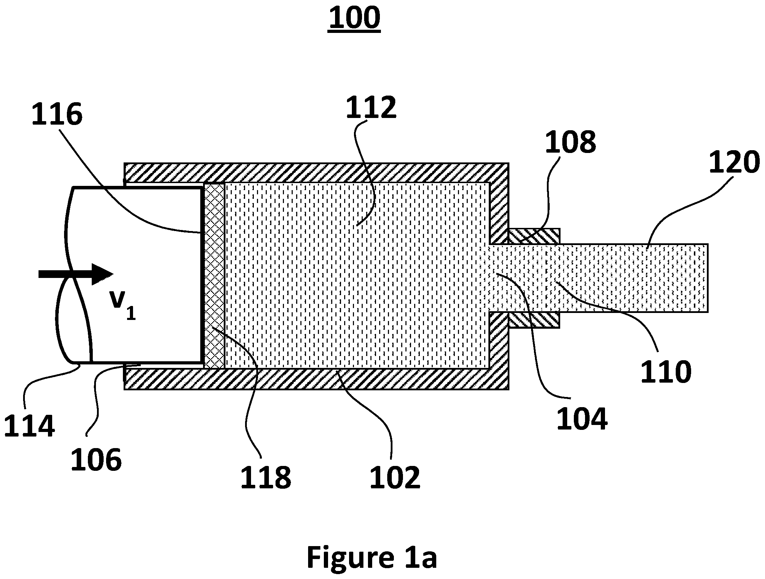

Figure 1a shows an extrusion apparatus known in the art. A cylindrical extrusion chamber 102 has two open ends 104 and 106. An extrusion die 108 with a designed orifice 110 is installed at the first open end 104. The geometry of the orifice 110 is designed to form the extruded material into a chosen shape. A hot or cold billet 112 is placed into the extrusion chamber 102 from the second open end 106.

A punch 114 is positioned at the second open end 106. Its working face 116 would usually be protected by a dummy block 118. The punch 114, together with dummy block 118, acts as a compression element and moves along the extrusion chamber 102 at a velocity v₁, forcing the billet 112 through the die orifice 110, producing a straight extrudate 120.

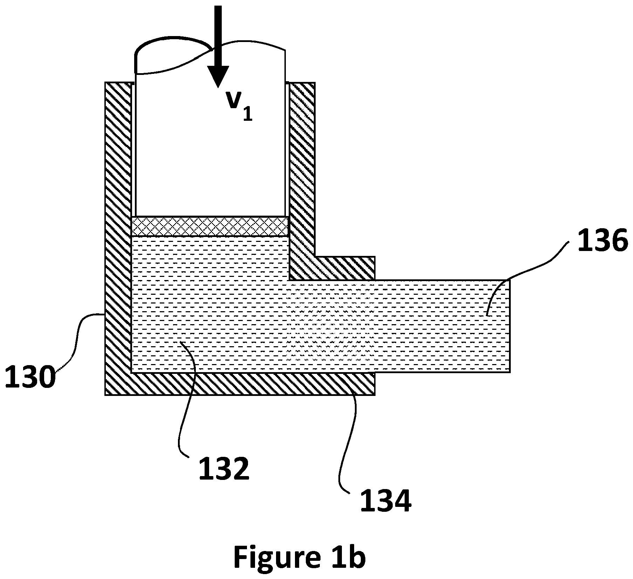

Another extrusion apparatus known in the art is shown in Figure 1b. In this case, an extrusion chamber 130 has an L-shape in transverse section, rather than being a straight cylinder. In this manner, the billet 132 is forced along a straight section 134 to form the straight extrudate 136. The straight section 134 is of sufficient length to ensure that the extrudate 136 is formed in a straight manner.

Once the straight extrudate 120 or 136 is produced, bending processes such as stretch bending, rotary draw bending, press bending, or roll bending are used to form a curved piece. However, forming curved sections of extrudate in this way has disadvantages such as reduced manufacturing productivity, spring-back, cross-sectional deformation and a requirement for various fillers, mandrels and heavy machinery, as discussed above.

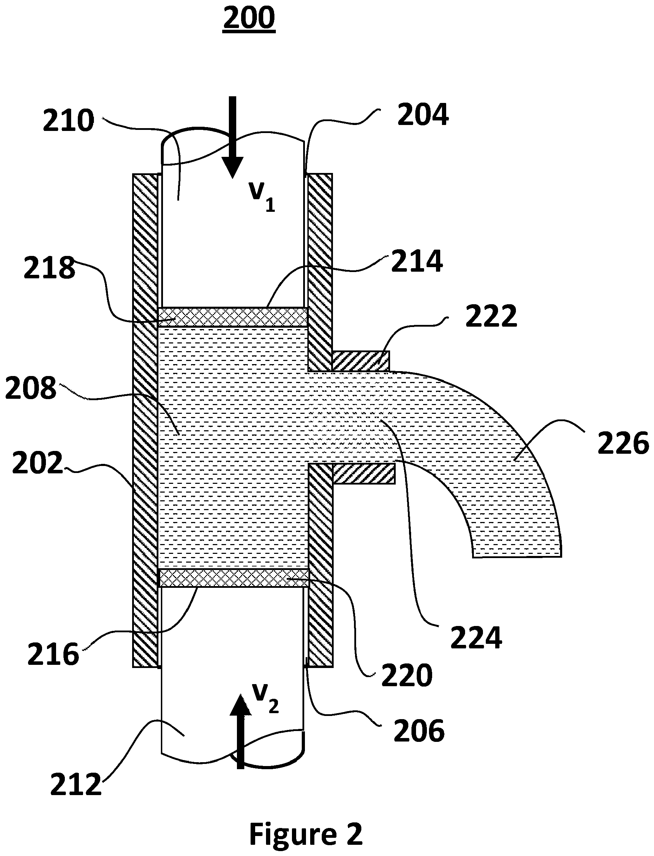

Figure 2 shows an extrusion apparatus 200 according to the present disclosure. A cylindrical extrusion chamber 202 has two open ends 204 and 206. A hot or cold billet 208 is placed into the extrusion chamber 202 from the first open end 204 and/or the second open end 206. For example, an aluminium alloy billet may be pre-heated to 350-550°C for warm or hot extrusion or remain unheated for cold extrusion. A first punch 210 is positioned at the first open end 204. A second punch 212 is positioned at the second open end 206. The respective working faces 214 and 216 of the first and second punches 210 and 212 are protected by respective dummy blocks 218 and 220. An extrusion die 222 with a designed orifice 224 is installed in the side wall of the extrusion chamber 202.

The first punch 210 together with dummy block 218 act as a first compression element and the second punch 212 together with dummy clock 220 act as a second compression element. The skilled person with recognise that these compression elements could be replaced by any other suitable compression means. The first and second compression elements are independently movable relative to the extrusion chamber 202. As described below, this allows the profile of an extrudate to be controlled, particularly with respect to its curvature.

In operation, pressure is applied to the two dummy blocks 218 and 220 via the corresponding two punches 210 and 212 simultaneously. The velocity of the first punch 210 is v₁, and the velocity of the second punch 212 is v₂. As the punches move towards each other, the billet 208 is forced sideways out of the extrusion chamber 202 through the die orifice 224. Its exiting direction is perpendicular to the punch motion direction.

To produce a curved extrudate, the rate of mass flow provided by each of the compression elements can be adjusted. In one embodiment, the velocities of the punches 210 and 212 can be adjusted to provide a curved extrudate. When one punch is moved faster than the other, a flow velocity gradient is produced across the die orifice 224. Therefore, the extruded profile bends towards the side of the extrusion chamber 202 which has the lower extrusion velocity. In Figure 2, the velocity v₁ of the first punch 210 is larger than the velocity v₂ of the second punch 212. Therefore, the extrudate 226 bends towards the second open end 206. In another embodiment, the area of the first dummy block 218 is greater than that of the second dummy block 220. In this instance, the extruded profile will bend downwards as shown in Fig. 2 even when v₁=v₂.

The essence is to control the volume of material flowing into the die exit 222 per unit time, which can be expressed as Q=Sv. Here S is the cross-sectional area and v is the velocity. Therefore, increasing the velocity v₁ and/or the area of the first dummy block 218 can lead to more material flowing into the upper side of the die exit 222 compared with the lower side.

By creating a controlled gradient of flow velocity across the exit of an extrusion die orifice utilizing two extrusion punches, the extrusion and bending operations are performed simultaneously. This removes the need for post-processing of straight extruded pieces to provide curvature, and overcomes the issues mentioned above.

By adjusting the ratio of the velocities of the two punches (or more generally the rate of material flow Q), the curvature of the extrudate 226 can be adjusted. If the velocity ratio is defined as v₂/v₁, a lower velocity ratio tends to increase the material flow velocity gradient at the die exit and lead to greater curvature. When this velocity ratio is less than 1/3, bending curvature increases significantly with reducing velocity ratio. Maximum curvature results at zero velocity of the lower punch 212. The velocity ratio could be changed during extrusion. This will enable the curvature of the extrudate 226 to be changed as extrusion proceeds, which allows more complex extrusions. Additionally, the relative cross-sectional areas of the extrusion chamber 202 and the orifice 224 can be adjusted to change the curvature. An extrusion ratio is defined as the ratio of the cross-sectional area of the billet to the cross-sectional area of the extruded profile. These areas are controlled by adjusting the cross-sectional area of the extrusion chamber 202 and the extrusion orifice 224 respectively. For solid circular bar extrusion, the extrusion ratio can be defined as the square of the diameter ratio of the extrusion chamber 202 to the orifice 224. For a tubular circular extrusion (a hollow bar), it can be defined as *D*₁²/( *D*₂²-*D*₃²), where *D*₁, *D*₂, *D*₃ are the respective diameters of the extrusion chamber 202, the orifice 224 and a mandrel fixed to the inner wall of the extrusion chamber opposite to the exit die to define the wall thickness of the tube.

A larger extrusion ratio tends to increase the material flow velocity gradient at the die exit and lead to greater curvature. For a constant diameter of the extrusion chamber 202, the curvature of the extrudate 226 is increased as the diameter of the orifice 224 is decreased. Conversely, the curvature of the extrudate 226 is reduced as the diameter orifice 224 is increased. The effect of changing the extrusion ratio is less than that of changing the velocity ratio, especially when velocity ratio is greater than 0.5. Below this value, the effect of extrusion ratio increases as velocity ratio v₂/v₁ decreases.

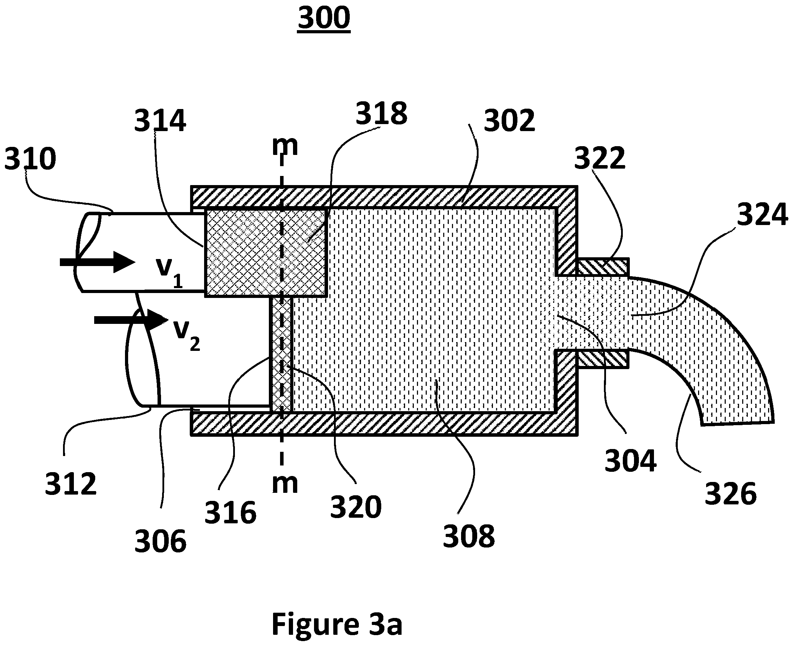

Figure 3a shows an alternative extrusion apparatus 300 not forming part of the claimed invention.

The apparatus 300 is similar to the apparatus 100 of Figure 1a, except that two adjacent punches are used instead of a single punch. A cylindrical extrusion chamber 302 has two open ends 304 and 306. A hot or cold billet 308 is placed into the extrusion chamber 302 from the second open end 306. First and second punches 310 and 312 are positioned adjacent to one another at the second open end 306. The respective working faces 314 and 316 of the first and second punches 310 and 312 are protected by a respective dummy blocks 318 and 320. An extrusion die 322 with a designed orifice 324 is installed at the first open end 304.

The length of the first dummy block 318 is shown as longer than that of the second dummy block 320. In the case that the second dummy block 320 moves faster than the first dummy block 318, then the second dummy block 320 may entirely pass the first dummy block 318. In this case, the billet 308 may flow out of the chamber 302 from the gap between the first dummy block 318 and the second dummy block 320. By implementing a longer profile of the first dummy block, this situation is mitigated.

In operation, pressure is applied to the two dummy blocks 318 and 320 via the corresponding two punches 310 and 312 simultaneously. The velocity of the first punch 310 is v₁, and the velocity of the second punch 312 is v₂. As the punches move alongside each other, the billet 308 is forced out of the extrusion chamber 302 through the die orifice 324.

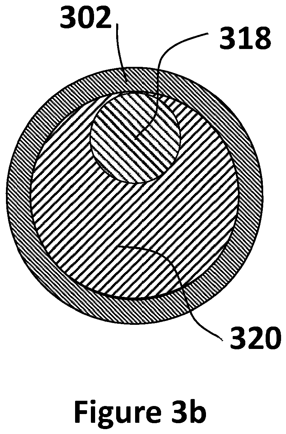

As in the above embodiment, when one punch is moved faster than the other, a flow velocity gradient is produced across the die orifice 324. Therefore, the extruded profile bends towards the side of the extrusion chamber 302 which has the lower extrusion velocity. In Figure 3a, the velocity v₁ of the first punch 310 is larger than the velocity v₂ of the second punch 312. Therefore, the extrudate 326 bends towards the side of the cylindrical extrusion chamber 302 with the second punch 312. Additionally or alternatively, the areas of the dummy blocks 318 and 320 may be adjusted to provide this effect. Figure 3b shows the dummy blocks 318 and 320 with different cross-sectional areas perpendicular to their direction of movement.

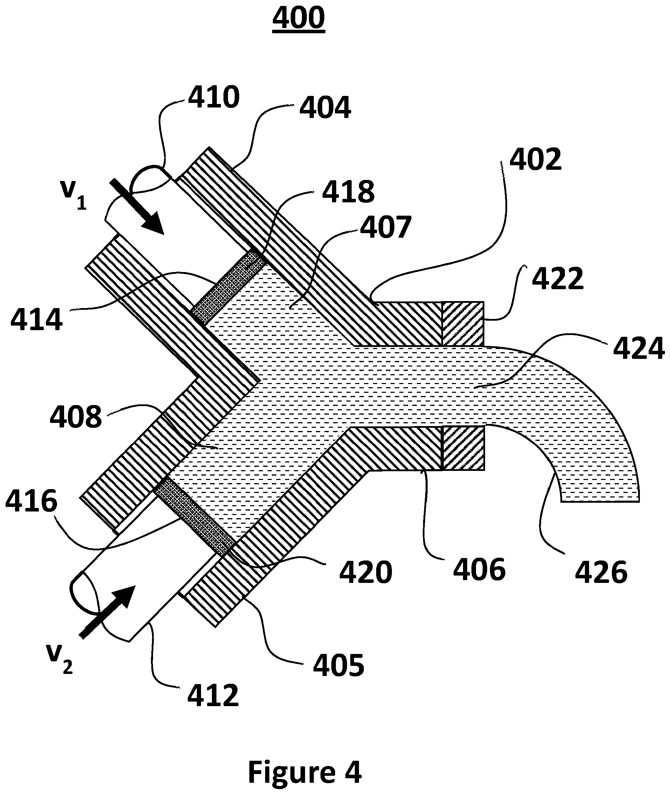

Figure 4 shows yet another alternative extrusion apparatus 400 according to the present disclosure. The apparatus comprises a Y-shaped extrusion chamber 402, having a first bore 404, a second bore 405 and a central container 406. The first bore 404 and the second bore 405 are positioned at an angle to each other and converge to meet the central container 406, forming the Y-shape. Each of the first bore 404, the second bore 405 and the central container 406 has an open end opposite to the point of convergence.

A first hot or cold billet 407 is placed into the open end of the first bore 404. A second hot or cold billet 408 is placed into the open end of the second bore 405. A first punch 410 is positioned at the open end of the first bore 404. A second punch 412 is positioned at the open end of the second bore 405. The respective working faces 414 and 416 of the first and second punches 410 and 412 are protected by a respective dummy block 418 and 420. An extrusion die 422 with a designed orifice 424 is installed at the open end of the central container 406.

In operation, pressure is applied to the two dummy blocks 418 and 420 via the corresponding two punches 410 and 412 simultaneously. The velocity of the first punch 410 is v₁, and the velocity of the second punch 412 is v₂. As the punches move towards each other, the billet 408 is forced sideways out of the extrusion chamber 402 through the die orifice 424.

As in the above embodiments, when one punch is moved faster than the other, a flow velocity gradient is produced across the die orifice 424. Therefore, the extruded profile bends towards the side of the extrusion chamber 402 which has the lower extrusion velocity. In Figure 4, the velocity v₁ of the first punch 410 is larger than the velocity v₂ of the second punch 412. Therefore, the extrudate 426 bends towards the second bore 405. Additionally or alternatively, the areas of the dummy blocks 418 and 420 may be adjusted to provide this effect.

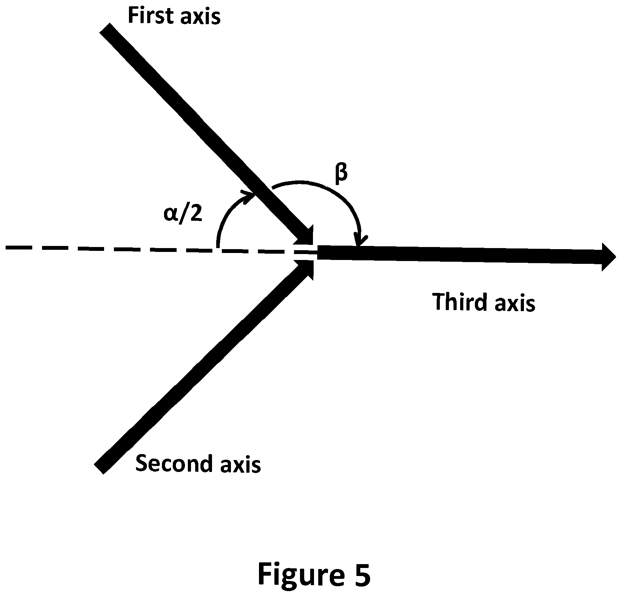

In the embodiments described above with reference to Figures 2 to 4, the first and second compression elements can be positioned at an angle *α*, shown in Figure 5. In Figure 5, the first and second axes correspond to the first and second compression elements, with the third axis bisecting the first and second axes and corresponding to the direction of extrusion from the die orifice. Hence, the plane of the cross-section of the extrusion orifice is perpendicular to a line bisecting the first and second axes, with the third axis being parallel to this line.

The first axis is at an angle of *β* = 180° - *α* /2 to the direction of flow of the extrudate from the extrusion apparatus (i.e. the third axis). Likewise, the second axis is at an angle of *β* = 180° - *α* /2 to the third axis.

By having an angle of *β* < 180°, a shear stress can be exerted while the billet passes from the entrance to the extrusion chamber to the exit from the extrusion chamber. The shear stress exerted at the intersection between the first axis and the third axis (and likewise at the intersection between the second axis and the third axis) causes severe plastic deformation (SPD) of the billet at the point of intersection of the axes. SPD of the billet results in an extruded profile with an ultra-fine grain size, thereby improving the mechanical properties of the extruded profile. SPD of the billet increases as the angle *β* decreases (i.e. as angle *α* increases), thereby giving rise to improved mechanical properties arising from SPD with reduced angle *β*.

The first and second axes may be orientated at an angle 0° ≤ *α* ≤ 360°. The extrusion apparatus schematically illustrated in Figure 2 corresponds to an angle of *α* = 180°. The extrusion apparatus schematically illustrated in Figure 3 corresponds to an angle of *α* = 0°. The extrusion apparatus schematically illustrated in Figure 4 may have any arbitrary angle between 0° and 360°.

By using any of the above embodiments, curved sections with undistorted cross-sections can be achieved by utilising asymmetric flow in the extrusion die. Since it is a natural bending process based on internal differential material flow rather than external bending force, defects such as distortion and thinning of the cross-section are avoided. The combination of the extrusion and bending processes into a single process, thus eschews the complication of an extra external bending apparatus.

This effect is achieved by variations in velocities v₁ and v₂ of the compression elements (formed of punches and dummy blocks). However, in some embodiments, the compression elements may move at the same velocity, with the velocity gradient across the extrusion orifice being a function of geometric features (such as a greater surface area for one dummy block/compression element in comparison with the other). In other examples, a combination of geometric features and the velocities of the compression elements may result in a desired velocity gradient at the extrusion orifice.

In any of the above embodiments, a guide external to the die orifice 224, 324, 424 may be employed to ensure precise curve accuracy. Any of the above embodiments may be used for extrusion of solid bars or tubes. For hollow extrusion, a mandrel may be fixed to the inner wall of the extrusion chamber opposite to the exit die. The size of the mandrel relative to the size of the die orifice will define the wall thickness of the extruded tube. The curvature of the tube is reduced with increase of wall thickness of the tube. However, the effect of the wall thickness on curvature is small, compared with that of the velocity ratio. Otherwise, a similar tendency in the extrusion of round bars described before also occurs in extrusion of round tubes.

Any of the above embodiments may be used to produce curved profiles in any material that can be manufactured by the conventional extrusion procedure. The principal application is extrusion of metal alloys. These include aluminium, magnesium, copper, steel, titanium and nickel. The system has been described with reference to aluminium since this is where the most commercially feasible applications are likely to be, but the implementation is not exclusively related to aluminium.

Any of the above embodiments may be used for hot or cold extrusion. In the case of hot extrusion, the hot metal billet used can be virtually any metal alloy billet which is heated to the temperature generally used in the hot extrusion process. A True Temperature Technology (3T) facility is utilized to record exit temperature of the extruded part. By adjusting the extrusion velocities of the two punches while keeping the extrusion velocity ratio constant, exit temperature is maintained at a reasonable temperature where solution heat treatment (SHT) takes place. The target exit temperature for an extruded part is dependent on the metal alloy. For the 6xxx series aluminium alloys, temperatures within a range of 500-530°C for solution heat treatment should be realised at the die exit to achieve optimal mechanical properties. The extruded part can be quenched after SHT using water, mist spray or air cooling, depending on the alloy and the final mechanical property requirements.

Although the embodiments described in figures 2 to 5 above comprise two compression elements, it will be understood that further compression elements could be incorporated to control curvature in other planes.

## Claims

1. A method of extruding a material, comprising:
providing the material into an extrusion chamber (202) of an extrusion apparatus (200), wherein the extrusion chamber (202) comprises an extrusion orifice (224) and the extrusion apparatus (200) comprises a first compression element (210) and a second compression element (212) in communication with the interior of the extrusion chamber (202), the first (210) and second (212) compression elements being independently movable relative to the extrusion chamber (202);
moving the first (210) and second (212) compression elements to compress the material within the extrusion chamber (202) and cause a velocity gradient in the extrusion material across the extrusion orifice (224); and
extruding the material through the extrusion orifice (224) such that the velocity gradient forms an extrudate (226) with a curved profile;
**characterized in that** moving the first compression element (210) and the second compression element (212) comprises moving the first compression element (210) and the second compression element (212) at different speeds along a common axis, wherein moving the first compression element (210) and the second compression element (212) at different speeds along the common axis comprises moving the first compression element (210) and the second compression element (212) towards each other in opposite directions along the common axis

2. A method according to claim 1, wherein: the plane of the cross-section of the extrusion orifice (224) is parallel to the common axis such that extruding the material through the extrusion orifice (224) comprises extruding the material through the extrusion orifice (224) substantially perpendicular to the common axis.

3. A method of extruding a material, comprising:
providing the material into an extrusion chamber (402) of an extrusion apparatus (400),
wherein the extrusion chamber is a Y-shaped extrusion chamber (402) comprising a first bore (404), a second bore (405) and a central container (406), wherein the first bore (404) and the second bore (405) are positioned at an angle to each other and converge to meet the central container (406), and wherein each of the first bore (404), the second bore (405) and the central container (406) has an open end opposite to the point of convergence;
wherein providing the material into the extrusion chamber (402) comprises placing a first hot or cold billet (407) into the open end of the first bore (404) and placing a second hot or cold billet (408) into the open end of the second bore (405);
wherein the extrusion apparatus (400) further comprises an extrusion die (422) installed at the open end of the central container (406), the extrusion die (422) comprising an extrusion orifice (424); and
wherein the extrusion apparatus (400) comprises a first compression element (410) and a second compression element (412), wherein the first and second compression elements (410, 412) are in communication with the interior of the extrusion chamber (402), the first compression element (410) being movable within the first bore (404) relative to the extrusion chamber (402) and the second compression element (412) being independently movable within the second bore (405) relative to the extrusion chamber (402);
moving the first (410) and second (412) compression elements to compress the material within the extrusion chamber (402) and cause a velocity gradient in the extrusion material across the extrusion orifice (424); and
extruding the material through the extrusion orifice (424) such that the velocity gradient forms an extrudate (426) with a curved profile.

4. A method according to claim 3, wherein moving the first (410) and second (412) compression elements comprises moving the first compression element (410) along a first axis and moving the second compression element (412) along a second axis different to the first axis, wherein the first axis and the second axis are at an angle to one another, wherein the plane of the cross-section of the extrusion orifice (424) is perpendicular to a line that bisects the first and second axes such that extruding the material through the extrusion orifice (424) comprises extruding the material through the extrusion orifice (424) substantially parallel to the line.

5. A method according to claim 3 or claim 4, comprising moving the first compression element and second compression element at different speeds.

6. A method according to any one of the preceding claims, wherein the first compression element (210, 410) and second compression element (212, 412) have different cross-sectional areas perpendicular to their direction of movement; and/or
wherein the material is a metal alloy, wherein the metal alloy is optionally aluminium alloy or magnesium alloy.

7. A method according to any one of the preceding claims, further comprising providing a guide means adjacent to the extrusion orifice (224, 424) to control curvature of the extruded material (226, 426).

8. A method according to any one of the preceding claims, further comprising providing a mandrel in the extrusion chamber (202, 402) opposite to the extrusion orifice (224, 424), wherein extruding the material through the extrusion orifice (224, 424) optionally comprises extruding the material with a hollow cross-section defined by the mandrel and orifice (224, 424).

9. A method according to any one of the preceding claims, further comprising preheating the material before providing it into the extrusion chamber (202, 402), wherein the method optionally further comprises adjusting the speed of the first (210, 410) and second (212, 412) compression elements while keeping the velocity ratio constant, such that the temperature of the extruded material (226, 426) at the exit from the extrusion orifice (224, 424) is maintained at a target temperature at which solution heat treatment, SHT, takes place, wherein the extruded material (226, 426) is optionally quenched after SHT using water, mist spray or air cooling.

10. A method according to claims 1 to 8, further comprising varying the speed of movement of the first compression element (210, 410) and/or the second compression element (212, 412) to vary the velocity ratio as the material is extruded.

11. An apparatus (200) for extrusion of a material, the apparatus (200) comprising:
an extrusion chamber (202) for receipt of an extrusion material, the extrusion chamber (202) comprising an extrusion orifice (224);
a first compression element (210) and a second compression element (212), the first (210) and second (212) compression elements being in communication with the interior of the extrusion chamber (202) and being independently movable relative to the extrusion chamber (202), wherein:
the first (210) and second (212) compression elements are configured to be moved to compress material within the extrusion chamber (202) and cause a velocity gradient in the extrusion material across the extrusion orifice (224) such that the velocity gradient forms an extrudate (226) with a curved profile when material is extruded through the extrusion orifice (224); **characterized in that**
the first compression element (210) and the second compression element (212) are configured to be moved at different speeds along a common axis, wherein the first compression element (210) and the second compression element (212) are configured to be moved towards each other in opposite directions along the common axis.

12. An apparatus (200) according to claim 11, wherein: the plane of the cross-section of the extrusion orifice (224) is parallel to the common axis.

13. An apparatus (400) for extrusion of a material, the apparatus (400) comprising:
an extrusion chamber (402) for receipt of an extrusion material, wherein the extrusion chamber is a Y-shaped extrusion chamber (402) comprising a first bore (404), a second bore (405) and a central container (406), wherein the first bore (404) and the second bore (405) are positioned at an angle to each other and converge to meet the central container (406), and wherein each of the first bore (404), the second bore (405) and the central container (406) has an open end opposite to the point of convergence, wherein the extrusion chamber (402) is configured for receipt of a first billet (407) into the open end of the first bore (404) and for receipt of a second billet (408) into the open end of the second bore (405);
an extrusion die (422) installed at the open end of the central container (406), the extrusion die (422) comprising an extrusion orifice (424);
a first compression element (410) and a second compression element (412), the first (410) and second (412) compression elements being in communication with the interior of the extrusion chamber (402), the first compression element (410) being movable within the first bore (404) relative to the extrusion chamber (402) and the second compression element (412) being independently movable within the second bore (405) relative to the extrusion chamber (402),
wherein the first (410) and second (412) compression elements are configured to be moved to compress material within the extrusion chamber (402) and cause a velocity gradient in the extrusion material across the extrusion orifice (424) such that the velocity gradient forms an extrudate (426) with a curved profile when material is extruded through the extrusion orifice (424).

14. An apparatus (400) according to claim 13, wherein the first compression element (410) is configured to be moved along a first axis and the second compression element (412) is configured to be moved along a second axis different to the first axis, wherein the first axis and the second axis are at an angle to one another, and wherein the plane of the cross-section of the extrusion orifice (424) is perpendicular to a line that bisects the first and second axes.

15. An apparatus according to any of claims 11 to 14, wherein the first compression element (210, 410) and second compression element (212, 412) are configured to be moved simultaneously; and, optionally:
wherein the first compression element (410) and second compression element (412) are configured to be moved at different speeds; and/or
wherein the first compression element (210, 410) and second compression element (212, 412) have different cross-sectional areas perpendicular to their direction of movement.

16. An apparatus (200, 400) according to any one of claims 11 to 15, further comprising a guide means adjacent to the extrusion orifice (224, 424) to control curvature of the extruded material (226, 426); and/or further comprising a mandrel in the extrusion chamber (202, 402) opposite to the extrusion orifice (224, 424).

17. An apparatus (200, 400) according to any one of claims 11 to 16, wherein the first compression element (210, 410) and/or the second compression element (212, 412) are configured to be moved at a varying speed.

## Patentansprüche

1. Verfahren zum Extrudieren eines Materials, Folgendes umfassend:
Bereitstellen des Materials in einer Extrudierkammer (202) einer Extrudiervorrichtung (200), wobei die Extrudierkammer (202) eine Extrudieröffnung (224) umfasst und die Extrudiervorrichtung (200) ein erstes Kompressionselement (210) und ein zweites Kompressionselement (212) in Verbindung mit dem Inneren der Extrudierkammer (202) umfasst, wobei das erste (210) und das zweite (212) Kompressionselement in Bezug auf die Extrudierkammer (202) unabhängig beweglich sind;
Bewegen des ersten (210) und des zweiten (212) Kompressionselements, um das Material in der Extrudierkammer (202) zusammenzupressen und einen Geschwindigkeitsgradienten in dem Extrudiermaterial über die Extrudieröffnung (224) zu verursachen; und
Extrudieren des Materials durch die Extrudieröffnung (224), so dass der Geschwindigkeitsgradient ein Extrudat (226) mit einem gekrümmten Profil ausbildet;
**dadurch gekennzeichnet, dass**
Bewegen des ersten Kompressionselements (210) und des zweiten Kompressionselements (212) Bewegen des ersten Kompressionselements (210) und des zweiten Kompressionselements (212) bei verschiedenen Geschwindigkeiten entlang einer gemeinsamen Achse umfasst, wobei Bewegen des ersten Kompressionselements (210) und des zweiten Kompressionselements (212) bei verschiedenen Geschwindigkeiten entlang der gemeinsamen Achse Bewegen des ersten Kompressionselements (210) und des zweiten Kompressionselements (212) aufeinander zu in entgegengesetzten Richtungen entlang der gemeinsamen Achse umfasst.

2. Verfahren nach Anspruch 1, wobei:
die Ebene des Querschnitts der Extrudieröffnung (224) parallel zu der gemeinsamen Achse ist, so dass Extrudieren des Materials durch die Extrudieröffnung (224) Extrudieren des Materials durch die Extrudieröffnung (224) im Wesentlichen senkrecht zu der gemeinsamen Achse umfasst.

3. Verfahren zum Extrudieren eines Materials, Folgendes umfassend:
Bereitstellen des Materials in einer Extrudierkammer (402) einer Extrudiervorrichtung (400),
wobei die Extrudierkammer eine Y-förmige Extrudierkammer (402) ist, die eine erste Bohrung (404), eine zweite Bohrung (405) und einen zentralen Behälter (406) umfasst, wobei die erste Bohrung (404) und die zweite Bohrung (405) in einem Winkel zueinander positioniert sind und zusammenlaufen, um den zentralen Behälter (406) zu treffen, und wobei jedes Element der ersten Bohrung (404), der zweiten Bohrung (405) und des zentralen Behälters (406) ein offenes Ende aufweist, das dem Punkt des Zusammenlaufens entgegengesetzt ist;
wobei Bereitstellen des Materials in der Extrudierkammer (402) Anordnen eines ersten heißen oder kalten Pressrohlings (407) in dem offenen Ende der ersten Bohrung (404) und Anordnen eines zweiten heißen oder kalten Pressrohlings (408) in dem offenen Ende der zweiten Bohrung (405) umfasst;
wobei die Extrudiervorrichtung (400) weiterhin eine Extrudierdüse (422) umfasst, die an dem offenen Ende des zentralen Behälters (406) installiert ist, wobei die Extrudierdüse (422) eine Extrudieröffnung (424) umfasst; und
wobei die Extrudiervorrichtung (400) ein erstes Kompressionselement (410) und ein zweites Kompressionselement (412) umfasst, wobei das erste und das zweite Kompressionselement (410, 412) mit dem Inneren der Extrudierkammer (402) verbunden sind, wobei das erste Kompressionselement (410) in der ersten Bohrung (404) in Bezug auf die Extrudierkammer (402) beweglich ist und wobei das zweite Kompressionselement (412) in der zweiten Bohrung (405) in Bezug auf die Extrudierkammer (402) unabhängig beweglich ist;
Bewegen des ersten (410) und des zweiten (412) Kompressionselements, um das Material in der Extrudierkammer (402) zusammenzupressen und einen Geschwindigkeitsgradienten in dem Extrudiermaterial über die Extrudieröffnung (424) zu verursachen; und
Extrudieren des Materials durch die Extrudieröffnung (424), so dass der Geschwindigkeitsgradient ein Extrudat (426) mit einem gekrümmten Profil ausbildet.

4. Verfahren nach Anspruch 3, wobei Bewegen des ersten (410) und des zweiten (412) Kompressionselements Bewegen des ersten Kompressionselements (410) entlang einer ersten Achse und Bewegen des zweiten Kompressionselements (412) entlang einer zweiten Achse umfasst, die von der ersten Achse verschieden ist, wobei die erste Achse und die zweite Achse in einem Winkel aneinander sind, wobei die Ebene des Querschnitts der Extrudieröffnung (424) senkrecht zu einer Linie ist, welche die erste und die zweite Achse halbiert, so dass Extrudieren des Materials durch die Extrudieröffnung (424) Extrudieren des Materials durch die Extrudieröffnung (424) im Wesentlichen parallel zu der Linie umfasst.

5. Verfahren nach Anspruch 3 oder 4, Bewegen des ersten Kompressionselements und des zweiten Kompressionselements bei verschiedenen Geschwindigkeiten umfassend.

6. Verfahren nach einem der vorhergehenden Ansprüche, wobei das erste Kompressionselement (210, 410) und das zweite Kompressionselement (212, 412) verschiedene Querschnittsflächen senkrecht zu ihrer Bewegungsrichtung aufweisen; und/oder
wobei das Material eine Metalllegierung ist, wobei die Metalllegierung gegebenenfalls eine AluminiumLegierung oder eine Magnesium-Legierung ist.

7. Verfahren nach einem der vorhergehenden Ansprüche, weiterhin Bereitstellen eines Führungsmittels umfassend, das an die Extrudieröffnung (224, 424) angrenzt, um eine Krümmung des extrudierten Materials (226, 426) zu steuern.

8. Verfahren nach einem der vorhergehenden Ansprüche, weiterhin Bereitstellen eines Dorns in der Extrudierkammer (202, 402) gegenüber der Extrudieröffnung (224, 424) umfassend, wobei Extrudieren des Materials durch die Extrudieröffnung (224, 424) gegebenenfalls Extrudieren des Materials mit einem hohlen Querschnitt umfasst, der durch den Dorn und die Öffnung (224, 424) definiert ist.

9. Verfahren nach einem der vorhergehenden Ansprüche, weiterhin Vorheizen des Materials vor seinem Bereitstellen in der Extrudierkammer (202, 402) umfassend, wobei das Verfahren gegebenenfalls weiterhin Einstellen der Geschwindigkeit des ersten (210, 410) und des zweiten (212, 412) Kompressionselements umfasst, während das Geschwindigkeitsverhältnis konstant gehalten wird, so dass die Temperatur des extrudierten Materials (226, 426) an dem Ausgang aus der Extrudieröffnung (224, 424) bei einer Zieltemperatur unterhalten wird, bei der Lösungsglühen, SHT, erfolgt, wobei das extrudierte Material (226, 426) nach dem SHT gegebenenfalls unter Verwendung von Wasser, Sprühnebel oder Luftkühlung abgeschreckt wird.

10. Verfahren nach den Ansprüchen 1 bis 8, weiterhin Variieren der Bewegungsgeschwindigkeit des ersten Kompressionselements (210, 410) und/oder des zweiten Kompressionselements (212, 412) umfassend, um das Geschwindigkeitsverhältnis zu variieren, während das Material extrudiert wird.

11. Vorrichtung (200) zum Extrudieren eines Materials, die Vorrichtung (200) Folgendes umfassend:
eine Extrudierkammer (202) zum Aufnehmen eines Extrudiermaterials, wobei die Extrudierkammer (202) eine Extrudieröffnung (224) umfasst;
ein erstes Kompressionselement (210) und ein zweites Kompressionselement (212), wobei das erste (210) und das zweite (212) Kompressionselement mit dem Innere der Extrudierkammer (202) verbunden sind und in Bezug auf die Extrudierkammer (202) unabhängig beweglich sind, wobei:
das erste (210) und das zweite (212) Kompressionselement eingerichtet sind, um bewegt zu werden, um Material in der Extrudierkammer (202) zusammenzupressen und einen Geschwindigkeitsgradienten in dem Extrudiermaterial über die Extrudieröffnung (224) zu verursachen, so dass der Geschwindigkeitsgradient ein Extrudat (226) mit einem gekrümmten Profil ausbildet, wenn Material durch die Extrudieröffnung (224) extrudiert wird; **dadurch gekennzeichnet, dass**
das erste Kompressionselement (210) und das zweite Kompressionselement (212) eingerichtet sind, um bei verschiedenen Geschwindigkeiten entlang einer gemeinsamen Achse bewegt zu werden, wobei das erste Kompressionselement (210) und das zweite Kompressionselement (212) eingerichtet sind, um aufeinander zu in entgegengesetzten Richtungen entlang der gemeinsamen Achse bewegt zu werden.

12. Vorrichtung (200) nach Anspruch 11, wobei:
die Ebene des Querschnitts der Extrudieröffnung (224) parallel zu der gemeinsamen Achse ist.

13. Vorrichtung (400) zum Extrudieren eines Materials, die Vorrichtung (400) Folgendes umfassend:
eine Extrudierkammer (402) zum Aufnehmen eines Extrudiermaterials, wobei die Extrudierkammer eine Y-förmige Extrudierkammer (402) ist, die eine erste Bohrung (404), eine zweite Bohrung (405) und einen zentralen Behälter (406) umfasst, wobei die erste Bohrung (404) und die zweite Bohrung (405) in einem Winkel zueinander positioniert sind und zusammenlaufen, um den zentralen Behälter (406) zu treffen, und wobei jedes Element der ersten Bohrung (404), der zweiten Bohrung (405) und des zentralen Behälters (406) ein offenes Ende aufweist, das dem Punkt des Zusammenlaufens entgegengesetzt ist, wobei die Extrudierkammer (402) zum Aufnehmen eines ersten Pressrohlings (407) in dem offenen Ende der ersten Bohrung (404) und zum Aufnehmen eines zweiten Pressrohlings (408) in dem offenen Ende der zweiten Bohrung (405) eingerichtet ist;
eine Extrudierdüse (422), die an dem offenen Ende des zentralen Behälters (406) installiert ist, wobei die Extrudierdüse (422) eine Extrudieröffnung (424) umfasst;
ein erstes Kompressionselement (410) und ein zweites Kompressionselement (412), wobei das erste (410) und das zweite (412) Kompressionselement mit dem Inneren der Extrudierkammer (402) verbunden sind, wobei das erste Kompressionselement (410) in der ersten Bohrung (404) in Bezug auf die Extrudierkammer (402) beweglich ist und wobei das zweite Kompressionselement (412) in der zweiten Bohrung (405) in Bezug auf die Extrudierkammer (402) unabhängig beweglich ist,
wobei das erste (410) und das zweite (412) Kompressionselement eingerichtet sind, um bewegt zu werden, um Material in der Extrudierkammer (402) zusammenzupressen und einen Geschwindigkeitsgradienten in dem Extrudiermaterial über die Extrudieröffnung (424) zu verursachen, so dass der Geschwindigkeitsgradient ein Extrudat (426) mit einem gekrümmten Profil ausbildet, wenn Material durch die Extrudieröffnung (424) extrudiert wird.

14. Vorrichtung (400) nach Anspruch 13, wobei das erste Kompressionselement (410) eingerichtet ist, um entlang einer ersten Achse bewegt zu werden, und das zweite Kompressionselement (412) eingerichtet ist, um entlang einer zweiten Achse bewegt zu werden, die von der ersten Achse verschieden ist, wobei die erste Achse und die zweite Achse in einem Winkel aneinander sind, und wobei die Ebene des Querschnitts der Extrudieröffnung (424) senkrecht zu einer Linie ist, welche die erste und die zweite Achse halbiert.

15. Vorrichtung nach einem der Ansprüche 11 bis 14, wobei das erste Kompressionselement (210, 410) und das zweite Kompressionselement (212, 412) eingerichtet sind, um gleichzeitig bewegt zu werden; und wobei gegebenenfalls:
das erste Kompressionselement (410) und das zweite Kompressionselement (412) eingerichtet sind, um bei verschiedenen Geschwindigkeiten bewegt zu werden; und/oder
das erste Kompressionselement (210, 410) und das zweite Kompressionselement (212, 412) verschiedene Querschnittsflächen senkrecht zu ihrer Bewegungsrichtung aufweisen.

16. Vorrichtung (200, 400) nach einem der Ansprüche 11 bis 15, weiterhin ein Führungsmittel umfassend, das an die Extrudieröffnung (224, 424) angrenzt, um eine Krümmung des extrudierten Materials (226, 426) zu steuern; und/oder weiterhin einen Dorn in der Extrudierkammer (202, 402) gegenüber der Extrudieröffnung (224, 424) umfassend.

17. Vorrichtung (200, 400) nach einem der Ansprüche 11 bis 16, wobei das erste Kompressionselement (210, 410) und/oder das zweite Kompressionselement (212, 412) eingerichtet sind, um bei einer variierenden Geschwindigkeit bewegt zu werden.

## Revendications

1. Procédé d'extrusion d'un matériau, comprenant :
la fourniture du matériau dans une chambre d'extrusion (202) d'un appareil d'extrusion (200), la chambre d'extrusion (202) comprenant un orifice d'extrusion (224) et l'appareil d'extrusion (200) comprenant un premier élément de compression (210) et un second élément de compression (212) en communication avec l'intérieur de la chambre d'extrusion (202), les premier (210) et second (212) éléments de compression étant indépendamment mobiles par rapport à la chambre d'extrusion (202) ;
le déplacement des premier (210) et second (212) éléments de compression pour comprimer le matériau à l'intérieur de la chambre d'extrusion (202) et provoquer un gradient de vitesse dans le matériau d'extrusion à travers l'orifice d'extrusion (224) ; et
l'extrusion du matériau à travers l'orifice d'extrusion (224) de sorte que le gradient de vitesse forme un extrudat (226) avec un profil incurvé ;
**caractérisé en ce que** le déplacement du premier élément de compression (210) et du second élément de compression (212) comprend le déplacement du premier élément de compression (210) et du second élément de compression (212) à différentes vitesses le long d'un axe commun, le déplacement du premier élément de compression (210) et du second élément de compression (212) à différentes vitesses le long de l'axe commun comprenant le déplacement du premier élément de compression (210) et du second élément de compression (212) l'un vers l'autre dans des directions opposées le long de l'axe commun.

2. Procédé selon la revendication 1,
le plan de la section transversale de l'orifice d'extrusion (224) étant parallèle à l'axe commun de sorte que l'extrusion du matériau à travers l'orifice d'extrusion (224) comprend l'extrusion du matériau à travers l'orifice d'extrusion (224) sensiblement perpendiculaire à l'axe commun.

3. Procédé d'extrusion d'un matériau, comprenant :
la fourniture du matériau dans une chambre d'extrusion (402) d'un appareil d'extrusion (400),
la chambre d'extrusion étant une chambre d'extrusion en forme de Y (402) comprenant un premier alésage (404), un second alésage (405) et un récipient central (406), le premier alésage (404) et le second alésage (405) étant positionnés selon un angle l'un par rapport à l'autre et convergeant pour rencontrer le récipient central (406), et chacun du premier alésage (404), du second alésage (405) et du récipient central (406) ayant une extrémité ouverte opposée au point de convergence ;
la fourniture du matériau dans la chambre d'extrusion (402) comprenant le placement d'une première billette chaude ou froide (407) dans l'extrémité ouverte du premier alésage (404) et le placement d'une seconde billette chaude ou froide (408) dans l'extrémité ouverte du second alésage (405) ;
l'appareil d'extrusion (400) comprenant en outre une filière d'extrusion (422) installée à l'extrémité ouverte du récipient central (406), la filière d'extrusion (422) comprenant un orifice d'extrusion (424) ; et
l'appareil d'extrusion (400) comprenant un premier élément de compression (410) et un second élément de compression (412), les premier et second éléments de compression (410, 412) étant en communication avec l'intérieur de la chambre d'extrusion (402), le premier élément de compression (410) étant mobile à l'intérieur du premier alésage (404) par rapport à la chambre d'extrusion (402) et le second élément de compression (412) étant mobile indépendamment à l'intérieur du second alésage (405) par rapport à la chambre d'extrusion (402) ;
le déplacement des premier (410) et second (412) éléments de compression pour comprimer le matériau à l'intérieur de la chambre d'extrusion (402) et provoquer un gradient de vitesse dans le matériau d'extrusion à travers l'orifice d'extrusion (424) ; et
l'extrusion du matériau à travers l'orifice d'extrusion (424) de sorte que le gradient de vitesse forme un extrudat (426) avec un profil incurvé.

4. Procédé selon la revendication 3, le déplacement des premier (410) et second (412) éléments de compression comprenant le déplacement du premier élément de compression (410) le long d'un premier axe et le déplacement du second élément de compression (412) le long d'un second axe différent du premier axe, le premier axe et le second axe formant un angle l'un par rapport à l'autre, le plan de la section transversale de l'orifice d'extrusion (424) étant perpendiculaire à une ligne qui divise en deux parties égales le premier et le second axe de sorte que l'extrusion du matériau à travers l'orifice d'extrusion (424) comprend l'extrusion du matériau à travers l'orifice d'extrusion (424) sensiblement parallèle à la ligne.

5. Procédé selon la revendication 3 ou la revendication 4, comprenant le déplacement du premier élément de compression et du second élément de compression à des vitesses différentes.

6. Procédé selon l'une quelconque des revendications précédentes, le premier élément de compression (210, 410) et le second élément de compression (212, 412) ayant des surfaces de section transversale différentes perpendiculairement à leur direction de déplacement ; et/ou
le matériau étant un alliage métallique, l'alliage métallique étant éventuellement un alliage d'aluminium ou un alliage de magnésium.

7. Procédé selon l'une quelconque des revendications précédentes, comprenant en outre la fourniture d'un moyen de guidage adjacent à l'orifice d'extrusion (224, 424) pour commander la courbure du matériau extrudé (226, 426) .

8. Procédé selon l'une quelconque des revendications précédentes, comprenant en outre la fourniture d'un mandrin dans la chambre d'extrusion (202, 402) à l'opposé de l'orifice d'extrusion (224, 424), l'extrusion du matériau à travers l'orifice d'extrusion (224, 424) comprenant éventuellement l'extrusion du matériau avec une section transversale creuse définie par le mandrin et l'orifice (224, 424).

9. Procédé selon l'une quelconque des revendications précédentes, comprenant en outre le préchauffage du matériau avant de le fournir dans la chambre d'extrusion (202, 402), le procédé comprenant en outre éventuellement le réglage de la vitesse des premier (210, 410) et second (212, 412) éléments de compression tout en maintenant constant le rapport de vitesse, de sorte que la température du matériau extrudé (226, 426) à la sortie de l'orifice d'extrusion (224, 424) est maintenue à une température cible à laquelle le traitement thermique en solution, SHT, a lieu, le matériau extrudé (226, 426) étant éventuellement trempé après le SHT en utilisant un refroidissement par eau, par pulvérisation de brouillard ou par air.

10. Procédé selon les revendications 1 à 8, comprenant en outre la variation de la vitesse de déplacement du premier élément de compression (210, 410) et/ou du second élément de compression (212, 412) pour faire varier le rapport de vitesse lorsque le matériau est extrudé.

11. Appareil (200) pour l'extrusion d'un matériau, l'appareil (200) comprenant :
une chambre d'extrusion (202) pour recevoir un matériau à extruder, la chambre d'extrusion (202) comprenant un orifice d'extrusion (224),
un premier élément de compression (210) et un second élément de compression (212), le premier (210) et second (212) éléments de compression étant en communication avec l'intérieur de la chambre d'extrusion (202) et pouvant être déplacés indépendamment par rapport à la chambre d'extrusion (202),
les premier (210) et second (212) éléments de compression étant configurés pour être déplacés afin de comprimer le matériau à l'intérieur de la chambre d'extrusion (202) et provoquer un gradient de vitesse dans le matériau d'extrusion à travers l'orifice d'extrusion (224) de sorte que le gradient de vitesse forme un extrudat (226) avec un profil incurvé lorsque le matériau est extrudé à travers l'orifice d'extrusion (224) ; **caractérisé en ce que**
le premier élément de compression (210) et le second élément de compression (212) sont configurés pour être déplacés à des vitesses différentes le long d'un axe commun, le premier élément de compression (210) et le second élément de compression (212) étant configurés pour être déplacés l'un vers l'autre dans des directions opposées le long de l'axe commun.

12. Appareil (200) selon la revendication 11,
le plan de la section transversale de l'orifice d'extrusion (224) étant parallèle à l'axe commun.

13. Appareil (400) pour l'extrusion d'un matériau, l'appareil (400) comprenant :
une chambre d'extrusion (402) pour recevoir un matériau d'extrusion, la chambre d'extrusion étant une chambre d'extrusion en forme de Y (402) comprenant un premier alésage (404), un second alésage (405) et un récipient central (406), le premier alésage (404) et le second alésage (405) étant positionnés selon un angle l'un par rapport à l'autre et convergeant pour rencontrer le récipient central (406), et chacun du premier alésage (404), du second alésage (405) et du récipient central (406) ayant une extrémité ouverte opposée au point de convergence, la chambre d'extrusion (402) étant configurée pour recevoir une première billette (407) dans l'extrémité ouverte du premier alésage (404) et pour recevoir une seconde billette (408) dans l'extrémité ouverte du second alésage (405) ;
une filière d'extrusion (422) installée à l'extrémité ouverte du récipient central (406), la filière d'extrusion (422) comprenant un orifice d'extrusion (424) ;
un premier élément de compression (410) et un second élément de compression (412), les premier (410) et second (412) éléments de compression étant en communication avec l'intérieur de la chambre d'extrusion (402), le premier élément de compression (410) étant mobile à l'intérieur du premier alésage (404) par rapport à la chambre d'extrusion (402) et le second élément de compression (412) étant mobile indépendamment à l'intérieur du second alésage (405) par rapport à la chambre d'extrusion (402),
les premier (410) et second (412) éléments de compression étant configurés pour être déplacés afin de comprimer le matériau à l'intérieur de la chambre d'extrusion (402) et de provoquer un gradient de vitesse dans le matériau d'extrusion à travers l'orifice d'extrusion (424) de sorte que le gradient de vitesse forme un extrudat (426) avec un profil incurvé lorsque le matériau est extrudé à travers l'orifice d'extrusion (424).

14. Appareil (400) selon la revendication 13, le premier élément de compression (410) étant configuré pour être déplacé le long d'un premier axe et le second élément de compression (412) étant configuré pour être déplacé le long d'un second axe différent du premier axe, le premier axe et le second axe formant un angle l'un par rapport à l'autre, et le plan de la section transversale de l'orifice d'extrusion (424) étant perpendiculaire à une ligne qui coupe en deux le premier et le second axe.

15. Appareil selon l'une quelconque des revendications 11 à 14, le premier élément de compression (210, 410) et le second élément de compression (212, 412) étant configurés pour être déplacés simultanément ; et, éventuellement :
le premier élément de compression (410) et le second élément de compression (412) étant configurés pour être déplacés à des vitesses différentes ; et/ou
le premier élément de compression (210, 410) et le second élément de compression (212, 412) ayant des zones de section transversale différentes perpendiculaires à leur direction de mouvement.

16. Appareil (200, 400) selon l'une quelconque des revendications 11 à 15, comprenant en outre un moyen de guidage adjacent à l'orifice d'extrusion (224, 424) pour commander la courbure du matériau extrudé (226, 426) ; et/ou comprenant en outre un mandrin dans la chambre d'extrusion (202, 402) opposé à l'orifice d'extrusion (224, 424).

17. Appareil (200, 400) selon l'une quelconque des revendications 11 à 16, le premier élément de compression (210, 410) et/ou le second élément de compression (212, 412) étant configurés pour être déplacés à une vitesse variable.
